# EUROPÄISCHE PATENTSCHRIFT

(11) **EP 2 459 432 B1**
(45) Veröffentlichungstag und Bekanntmachung des Hinweises auf die Patenterteilung: **30.12.2020**
(21) Anmeldenummer: 10728130.5
(22) Anmeldetag: 18.06.2010
(51) Int. Cl.: B62D 25/06

(54) **BAUKASTENSYSTEM UND VERFAHREN ZUM HERSTELLEN EINES DACHMODULS**
MODULAR SYSTEM AND METHOD FOR PRODUCING A ROOF MODULE
SYSTÈME MODULAIRE ET PROCÉDÉ DE FABRICATION D'UN MODULE DE TOIT

(30) Priorität: 01.08.2009 DE 102009035733
(43) Veröffentlichungstag der Anmeldung: 06.06.2012
(73) Patentinhaber: Daimler AG, 70372 Stuttgart (DE)
(72) Erfinder: DEMMER, Achim, 71106 Magstadt (DE); NESTLER, Christina, 75395 Ostelsheim (DE); SCHRADER, Jürgen, 71093 Weil im Schönbuch (DE); ZYGAN, Andreas, 76316 Malsch (DE)
(74) Vertreter: JENSEN & SON
(86) Internationale Anmeldenummer: PCT/EP2010/003687
(87) Internationale Veröffentlichungsnummer: WO 2011/015256

(56) Entgegenhaltungen:
- EP-A1- 0 709 244
- EP-A1- 1 897 733
- EP-A2- 1 974 968
- WO-A1-01/94141
- DE-A1- 10 228 410

## Beschreibung

Die Erfindung betrifft Kraftwagen, umfassend Kraftwagenrohbaustrukturen mit jeweils einem eine Dachöffnung ausbildenden Rahmen, mit dem jeweils ein ausgewähltes Dachmodul von einer Mehrzahl von jeweils bauvariantenspezifische Flächenelemente aufweisende Bauvarianten des Dachmoduls zu verbinden sind, gemäß Oberbegriff des Patentanspruchs 1.

Im Kraftwagenbau setzen sich zunehmend modulare Fertigungstechniken durch, bei welchen bestimmte Baugruppen abseits der Hauptfertigungslinie separat gefügt und dann als fertiges Modul wieder in die Hauptfertigungslinie eingeschleust werden. Insbesondere die Fertigung von Dachmodulen nach diesem Prinzip ist dem Stand der Technik als allgemein bekannt zu entnehmen. Für einen Kraftwagentyp werden dabei in der Regel mehrere Dachvarianten angeboten, beispielsweise Volldächer, Schiebedächer, Panoramadächer und dergleichen. Bislang unterscheiden sich die Dachmodule für diese Bauvarianten insbesondere auch darin, wie sie mit dem restlichen Kraftwagenrohbau verbunden werden. Panoramaglasdächer werden beispielsweise in der Regel mit einem Blechrahmen versteift und von oben her in den Rohbau eingeklebt. Andere Dachvarianten werden dagegen von unten her mit dem Rohbau gefügt und benötigen oftmals zusätzliche Montageteile und einen höheren Montageaufwand.

Für verschiedene Dachvarianten eines Kraftwagens müssen daher nachteiligerweise in der Hauptfertigungslinie mehrere Montagestationen bereitgestellt sein, da jede Dachvariante, wie geschildert, auf andere Weise mit dem Rohbau des Kraftwagens verbunden wird.

Aus der gattungsbildenden DE 102 28 410 A1 geht ein Personenkraftwagen mit einem modularen Dachaufbau hervor, der in unterschiedlichen Ausgestaltungen herstellbar und auch nach Herstellung eines Dachaufbaus durch Austausch von Dachelementen umrüstbar ist. Der Personenkraftwagen weist hierzu eine Kraftwagenrohbaustruktur mit einem Dachrahmen auf, der eine großflächige Dachöffnung begrenzt und umgibt. An diesem Kraftwagenrohbaustruktur-Dachrahmen ist nun für alle Bauvarianten des Dachaufbaus ein als Montageteil ausgebildeter Trägerrahmen zu befestigen, an dem gemäß einer ersten Bauvariante des Fahrzeugdaches eine Lagermechanik für ein außengeführtes Schiebedach anzubringen ist. Ebenso wird an diesen Trägerrahmen ein Glasdeckel fest angebracht, über dem beim Öffnen des Schiebedachs ein Glasdeckel nach hinten verschoben wird. Anstelle des Schiebedachs kann alternativ ein anderes, beispielsweise unbewegliche Glasdachelemente aufweisendes Dachmodul vorgesehen sein. Diese Glasdachelemente werden ausdrücklich nicht an dem Kraftwagenrohbaustruktur-Dachrahmen angebracht, sondern an vorderen und hinteren Hilfsrahmen, die ihrerseits an der Oberseite des Trägerrahmens fest angebracht sind. Die Hilfsrahmen stellen also Adapterelemente zum Anbringen der Dachelemente am Trägerrahmen dar. Festzuhalten bleibt, dass gemäß der ersten Bauvariante des als Schiebedach ausgebildeten Fahrzeugdaches die Anbindung der Flächenelemente am Fahrzeugdach mittels der Lagermechanik erfolgt, während bei der zweiten Bauvariante die Hilfsrahmenelemente vorgesehen sind. Es sind je nach Bauvariante also unterschiedliche Anbindungskonzepte vorgesehen.

Der vorliegenden Erfindung liegt die Aufgabe zugrunde, einen Kraftwagen der hier angesprochenen Art zu schaffen, welcher auch bei unterschiedlichen Bauvarianten des Dachmoduls auf besonders zeit- und kostengünstige Weise herstellbar ist.

Diese Aufgabe wird durch einen Kraftwagen mit den Merkmalen des Patentanspruchs 1 gelöst.

Es ist ein Baukastensystem vorgesehen, welches zur Herstellung einer Mehrzahl von Bauvarianten eines Dachmoduls für einen Kraftwagen dient. Hierzu sind eine Mehrzahl von bauvariantenspezifischen Adapterelementen und eine Mehrzahl von bauvariantenspezifischen Flächenelementen vorgesehen. Mittels jeweils wenigstens eines Adapterelements ist ein jeweiliges Flächenelement mit einem eine Dachöffnung ausbildenden Rahmen insbesondere einer Rohbaustruktur des Kraftwagens verbindbar. Durch die Adapterelemente wird eine einheitliche Anbindungsschnittstelle zwischen Dach und Rohbau geschaffen, so dass alle mit Hilfe des Baukastensystems erzeugbaren Dachmodule auf gleiche Weise mit der Kraftwagenrohbaustruktur verbunden werden können. Damit muss nicht mehr, wie aus dem Stand der Technik bekannt, für jede Bauvariante eine eigene Einbaustation für das Dachmodul in den Kraftwagenrohbau bereitgestellt werden, alle unterschiedlichen Module können vielmehr auf die selbe Weise in den Rohbau eingesetzt werden. Damit können vorteilhafterweise sowohl Herstellungszeit als auch Herstellungskosten eingespart werden.

Die bauvariantenspezifischen Flächenelemente umfassen hierbei bevorzugt Flächenelemente für Schiebedächer und/oder Panoramaglasdächer und/oder Hebeschiebedächer und/oder Volldächer. Dadurch können alle gängigen Bauvarianten von Kraftwagendächern vorteilhafterweise mittels ein und desselben Baukastensystems realisiert werden. Aus der Kombination von jeweils wenigstens zwei Flächenelementen entsteht dabei jeweils ein bauvariantenspezifisches Deckelteil.

Erfindungsgemäß ist vorgesehen, dass eine erste Bauvariante des Dachmoduls ein zwei der Flächenelemente umfassendes Deckelteil für ein Panoramaglasdach und eine zweite Bauvariante des Dachmoduls ein zwei der Flächenelemente umfassendes Deckelteil für ein Schiebehebedach umfasst, wobei die Flächenelemente der ersten und zweiten Bauvarianten des Dachmoduls mittels rahmenförmiger und jeweilige Öffnungen aufweisender Adapterelemente mit dem Rahmen der Kraftwagenrohbaustruktur zu verbinden ist.

Die bauvariantenspezifischen Adapterelemente sind bevorzugt rahmenförmig aufgebaut. Besonders bevorzugt sind die Adapterelemente in einen vorderen und einen hinteren Teilrahmen aufgetrennt, die im Bereich der B-Säule des Kraftwagens aneinander stoßen oder überlappen. Um eine zusätzliche Versteifung des Daches zu erzielen, kann in diesem Bereich ein zusätzliches Querverstärkungselement vorgesehen sein. Auch ein jeweiliges bauvariantenspezifisches Deckelteil ist bevorzugt im Bereich der B-Säule in ein vorderes und hinteres Flächenelement getrennt, da insbesondere der hintere Bereich des Deckelteils zwischen unterschiedlichen Bauvarianten oftmals keine Unterschiede aufweist. So wird beispielsweise ein Schiebedach und ein Hebeschiebedach das gleiche hintere Flächenelement umfassen. Lediglich die vorderen Flächenelemente, die die eigentliche Schiebedach- beziehungsweise Hebeschiebedachfunktion umfassen, müssen bei den beiden Bauvarianten unterschiedlich gestaltet sein.

In weiterer Ausgestaltung der Erfindung ist eine Mehrzahl von bauvariantenspezifischen Funktionselementen vorgesehen, welche mit wenigstens einem Adapterelement und/oder einem Flächenelement verbindbar sind. Hierbei kann es sich um die eigentliche Deckelmechanik zur Bewegung eines Schiebedachs, einen elektrischen Antrieb für bewegliche Teile des Dachs, Rollos, Windabweiser, Führungsschienen oder dergleichen handeln.

Im Folgenden soll die Erfindung und ihre Ausführungsformen anhand der Zeichnungen näher erläutert werden. Hierbei zeigen:
- Fig. 1: ein Rahmen einer Kraftwagenrohbaustruktur zur Aufnahme eines mit einem Ausführungsbeispiel des erfindungsgemäßen Baukastensystems hergestellten Dachmoduls;
- Fig. 2: Adapterelemente für ein Ausführungsbeispiel eines erfindungsgemäßen Baukastensystems;
- Fig. 3: Funktionselemente für ein Ausführungsbeispiel eines erfindungsgemäßen Baukastensystems und
- Fig. 4a - 4c: bauvariantenspezifische Flächenelemente und daraus gebildete Deckelteile für ein Ausführungsbeispiel eines erfindungsgemäßen Baukastensystems.

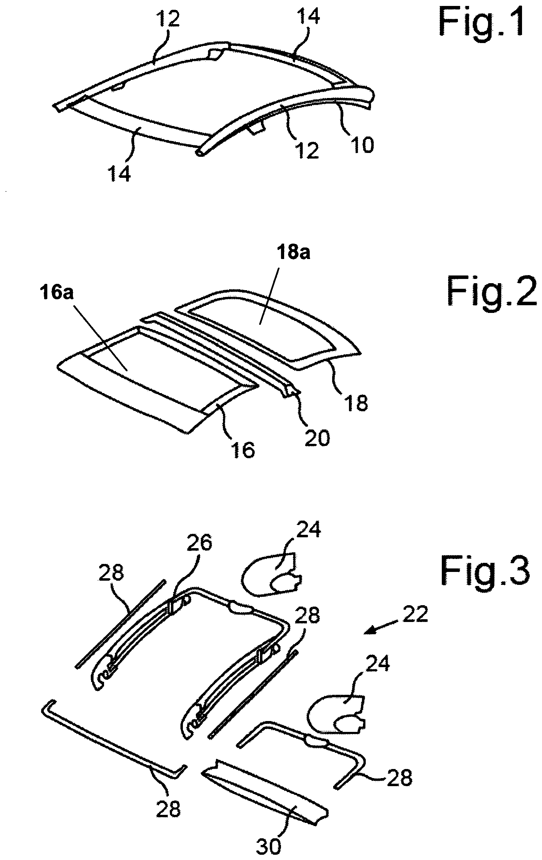

Die Rohbaustruktur eines Kraftwagens bildet, wie in Fig. 1 dargestellt, einen Rahmen 10 zur Aufnahme eines Dachmoduls aus. Dieser umfasst zwei Längsholme 12 und zwei Querholme 14.

Um unterschiedliche Bauvarianten des Dachmoduls bereitstellen zu können, werden, wie in Figur 2 gezeigt, Adapterelemente 16, 18, mit dem als Teil der Rohbaustruktur ausgebildeten Rahmen 10 verbunden. Die Adapterelemente 16, 18 sind dabei als rahmenförmige Kunststoffelemente ausgebildet, welche sich jeweils in etwa über die Hälfte der Längserstreckung des Dachmoduls erstrecken, fluchtend angeordnet sind und damit in Einbaulage des Dachmoduls in etwa im Bereich der B-Säule des Kraftwagens getrennt sind. Die rahmenförmigen Adapterelemente 16, 18 weisen jeweils großflächige Öffnungen 16a, 18a auf, die gegebenenfalls transparent oder öffenbar überdeckt werden können. Ebenfalls im Bereich der B-Säule und damit zwischen den Adapterelementen kann zur zusätzlichen Verstärkung des Dachmoduls ein Spiegel 20 angeordnet werden. Die Adapterelemente 16, 18 dienen zum einen der weiteren Versteifung des Dachmoduls und zum anderen insbesondere der Verbindung unterschiedlicher Flächen- und Funktionselemente mit dem Rahmen 10. Für alle Bauvarianten des Dachmoduls wird durch die Adapterelemente 16, 18 eine einheitliche Anbindungsgeometrie an den Rohbau bereitgestellt, wodurch alle Bauvarianten in einer einzigen Bearbeitungsstation in der Hauptfertigungslinie mit dem Rahmen 10 und damit mit dem Rohbau verbunden werden können.

Nach Montage der Adapterelemente 16, 18 am Rahmen 10 werden zusätzliche Funktionsbauteile 22, die in Fig. 3 in einer Übersicht dargestellt sind, mit dem Dachmodul verbunden. Hierbei handelt es sich um Antriebsmotoren 24 zum Antreiben von Schiebedächern, entsprechenden Schienensystemen 26, in welchen die Schiebedächer laufen, Führungsschienen 28 sowie Sonnenschutzrollos 30. Damit wird die notwendige Funktionalität für bewegliche Bauvarianten des Dachmoduls bereitgestellt.

Im abschließenden Montageschritt werden schließlich die Flächenelemente, welche das Dachmodul nach außen hin abschließen und die zusammen ein jeweiliges bauvariantenspezifisches Deckelteil ausbilden, an den bislang vorliegenden Zusammenbau montiert.

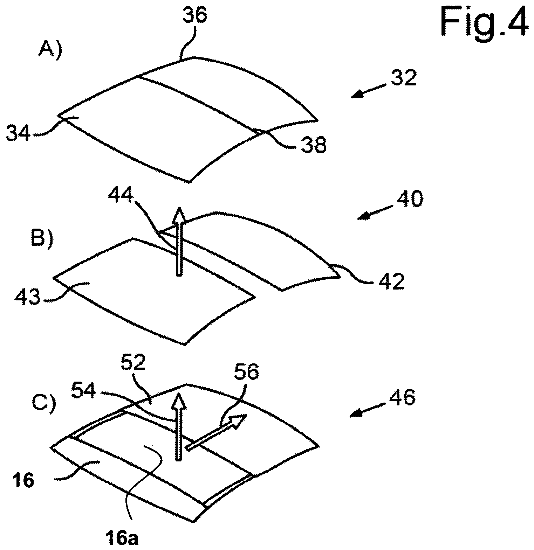

Fig. 4A zeigt ein Deckelteil 32 für ein Panoramaglasdach. Das Deckelteil 32 ist im Bereich der B-Säule zweigeteilt und umfasst ein vorderes Flächenelement 34 und einen hinteres Flächenelement 36, welche jeweils transparent ausgebildet sind. Im Bereich des Stoßes 38 zwischen den Flächenelementen 34 und 36 kann beispielsweise die in Fig. 2 gezeigte Verstärkung durch den Querspriegel 20 erfolgen. Auch ein nur teiltransparentes oder opakes Volldach kann durch entsprechende Auswahl der Flächenelemente 34, 36 auf diese Weise erzeugt werden.

Fig. 4B zeigt ein Deckelteil 40 für ein Schiebe-Hebedach, welches ebenfalls zweigeteilt ist. Das hintere Flächenelement 42 ist dabei in üblicher Weise als Blechaußenhaut ausgeführt, das vordere Flächenelement 43 enthält die eigentliche Ausstellmechanik, so dass das Schiebe-Hebedach in Richtung des Pfeils 44 ausgestellt werden kann.

Fig. 4C zeigt schließlich ein Deckelteil 46 für ein außenlaufendes Schiebedach, bei welchem auf dem vorderen Adapterelement 16, mit der Durchtrittsöffnung 16a aufweist, ein verschiebbares Dachelement 52 aufgebracht ist, welches zunächst in Richtung des Pfeils 54 ausgestellt und dann in Richtung des Pfeils 56 nach hinten über ein in der gezeigten Darstellung verdecktes hinteres Flächenelement verschoben werden kann.

Alle Deckelteile können, wie in Fig. 4A - C gezeigt, zweiteilig ausgeführt sein, es ist jedoch auch möglich, diese einstückig auszuführen.

Die jeweils hinteren Flächenelemente 36, 42 der drei in Fig. 4 gezeigten Varianten, sind über das jeweilige Adapterelement 18 feststehend an dem Fahrzeugsdach angeordnet. Die Flächenelemente können dabei transparent oder lichtdurchlässig und in weitgehend freier Materialwahl aus Glas, Kunststoff oder Blech bestehen. Das vordere Flächenelement 43, 52 kann beweglich und insbesondere zu öffnen ausgebildet sein.

Insbesondere ist es vorteilhaft, die Dachmodule so zu gestalten, dass sie von oben her in einen Fahrzeugrohbau eingesetzt, vorzugsweise eingeklebt werden können. Dies vereinfacht die Montage und verringert den benötigten Bauraum, so dass die Kopffreiheit für Fahrzeuginsassen verbessert wird. Gegenüber von unten her eingebauten Dachmodulen ist auch der Wasserablauf in den Nassbereich Rohbau möglich, sodass auf zusätzliche Wasserablaufschläuche verzichtet werden kann.

## Patentansprüche

1. Kraftwagen, umfassend Kraftwagenrohbaustrukturen mit jeweils einem eine Dachöffnung ausbildenden Rahmen (10), mit dem jeweils ein ausgewähltes Dachmodul von einer Mehrzahl von jeweils bauvariantenspezifische Flächenelemente aufweisende Bauvarianten des Dachmoduls zu verbinden sind, wobei
- eine erste Bauvariante des Dachmoduls ein zwei der Flächenelemente (34, 36, 42, 43, 48, 52) umfassendes Deckelteil (32) für ein Panoramaglasdach und
- eine zweite Bauvariante des Dachmoduls ein zwei der Flächenelemente (34, 36, 42, 43, 48, 52) umfassendes Deckelteil (40) für ein Schiebehebedach umfasst
- wobei die Flächenelemente der ersten und zweiten Bauvarianten des Dachmoduls mittels rahmenförmiger und jeweilige Öffnungen (16a, 18a) aufweisender Adapterelemente (16, 18) mit dem Rahmen (10) der Kraftwagenrohbaustruktur zu verbinden sind,
**dadurch gekennzeichnet, dass**
für alle Bauvarianten des Dachmoduls jeweils ein Dachmodulbauvariantenspezifisches Adapterelement (16, 18) vorgesehen ist, wobei diese Adapterelemente (16, 18) eine einheitliche Anbindungsgeometrie zum Verbinden des jeweiligen Adapterelements (16, 18) mit dem Kraftwagenrohbaustruktur-Rahmen (10) aufweisen, und dass alle Dachmodule auf die gleiche Weise mit dem Kraftwagenrohbaustruktur-Rahmen (10) zu verbinden sind.

2. Kraftwagen nach Anspruch 1,
**dadurch gekennzeichnet, dass**
eine dritte Bauvariante des Dachmoduls ein zwei der Flächenelemente (34, 36, 42, 43, 48, 52) umfassendes Deckelteil (46) für ein Schiebedach umfasst.

3. Kraftwagen nach Anspruch 1 oder 2,
**dadurch gekennzeichnet, dass**
eine vierte Bauvariante des Dachmoduls ein zwei der Flächenelemente (34, 36, 42, 43, 48, 52) umfassendes Deckelteil für ein Volldach umfasst.

4. Kraftwagen nach einem der vorhergehenden Ansprüche,
**dadurch gekennzeichnet, dass**
die bauvariantenspezifischen Adapterelemente (16, 18) wenigstens ein rahmenförmiges Kunststoffelement (16, 18) mit einer Durchtrittsöffnung (16a, 18a) umfassen.

5. Kraftwagen nach einem der vorhergehenden Ansprüche,
**dadurch gekennzeichnet, dass**
ein Querverstärkungselement (20) zur Querversteifung des Daches mit dem Rahmen (10) und/oder wenigstens einem der bauvariantenspezifischen Adapterelemente (16,18) verbindbar ist.

6. Kraftwagen nach einem der vorhergehenden Ansprüche,
**dadurch gekennzeichnet, dass**
eine Mehrzahl von bauvariantenspezifischen Funktionselementen (24, 26, 28) vorgesehen ist, welche mit dem Rahmen (10) und/oder wenigstens einem Adapterelement (16, 18) und/oder einem Deckelteil (32, 40, 46) verbindbar sind.

## Claims

1. Motor vehicle comprising a motor vehicle body frame structure with a frame (10) each forming a roof opening, to each of is to be joined a roof module selected from a plurality of design variants of the roof module, each having design variant-specific planar elements, wherein
- a first design variant of the roof module comprises a cover part (32) comprising two of the planar elements (34, 36, 42, 43, 48, 52) for a panoramic glass sunroof and
- a second design variant of the roof module comprises a cover part (40) comprising two of the planar elements (34, 36, 42, 43, 48, 52) for a tilt/slide sunroof,
- wherein the planar elements of the first and second design variants of the roof module are to be joined to the frame (10) of the motor vehicle body frame structure by means of frame-shaped adapter elements (16, 18) having openings (16a, 18a) each.
**characterised in that**
for each design variant of the roof module there is provided a roof module design variant-specific adapter element (16, 18), said adapter elements (16, 18) having a uniform connection geometry for joining the respective adapter element (16, 18) to the frame (10) of the motor vehicle body frame structure, and **in that** all roof modules are to be joined to the frame (10) of the motor vehicle body frame structure in the same way.

2. Motor vehicle according to claim 1,
**characterised in that**
a third design valiant of the roof module comprises a cover part (46) comprising two of the planar elements (34, 36, 42, 43, 48, 52) for a sliding sunroof.

3. Motor vehicle according to claim 1 or 2,
**characterised in that**
a fourth design valiant of the roof module comprises a cover part comprising two of the planar elements (34, 36, 42, 43, 48, 52) for a full roof.

4. Motor vehicle according to any of the preceding claims,
**characterised in that**
the design variant-specific adapter elements (16, 18) comprise at least one frame-shaped plastic element (16, 18) with a through-opening (16a, 18a).

5. Motor vehicle according to any of the preceding claims,
**characterised in that**
a transverse reinforcement element (20) can be joined to the frame (10) and/or to at least one of the design variant-specific adapter elements (16, 18) for transverse stiffening.

6. Motor vehicle according to any of the preceding claims,
**characterised in that**
a plurality of design variant-specific functional elements (24, 26, 28) is provided, which can be joined to the frame (10) and/or to at least one adapter element (16, 18) and/or to a cover part (32, 40, 46).

## Revendications

1. Véhicule à moteur, comprenant des structures de caisse en blanc avec respectivement un cadre (10) formant une ouverture de toit, auquel doivent être reliés respectivement un module de toit choisi d'une pluralité de variantes de construction présentant respectivement des éléments plats spécifiques à la variante de construction du module de toit,
- une première variante de construction du module de toit comprenant une partie de volet contenant deux des éléments plats (34, 36, 42, 43, 48, 52) pour un toit en verre panoramique et
- une deuxième variante de construction du module de toit comprenant une partie de volet (40) contenant au moins deux éléments plats (34, 36, 42, 43, 48, 52) pour un toit ouvrant
- les éléments plats de la première et de la seconde variante de construction du module de toit doivent être reliés au moyen d'éléments adaptateurs (16, 18) en forme de cadre et présentant respectivement des ouvertures (16a, 18a) au cadre (10) de la structure de caisse en blanc du véhicule à moteur,
**caractérisé en ce qu'**il est prévu, pour toutes les variantes de construction du module de toit, respectivement un élément adaptateur (16, 18) spécifique à la variante de construction du module de toit, lesdits éléments adaptateurs (16, 18) présentant une géométrie de liaison uniforme pour relier chaque élément adaptateur (16, 18) au cadre (10) de la structure de caisse en blanc du véhicule à moteur et **en ce que** tous les modules de toit doivent être reliés de la même manière au cadre (10) de la structure de caisse en blanc du véhicule à moteur.

2. Véhicule à moteur selon la revendication 1, **caractérisé en ce qu'**une troisième variante de construction du module de toit comprend une partie de volet (46) comprenant deux des éléments plats (34, 36, 42, 43, 48, 52) pour un toit ouvrant.

3. Véhicule à moteur selon la revendication 1 ou la revendication 2, **caractérisé en ce qu'**une quatrième variante de construction du module de toit comprend une partie de volet comprenant deux des éléments plats (34, 36, 42, 43, 48, 52) pour un toit plein.

4. Véhicule à moteur selon l'une quelconque des revendications précédentes, **caractérisé en ce que** les éléments adaptateurs (16, 18) spécifiques à une variante de construction comprennent au moins un élément en matière plastique (16, 18) en forme de cadre, une ouverture traversante y étant ménagée (16a, 18a).

5. Véhicule à moteur selon l'une quelconque des revendications précédentes, **caractérisé en ce qu'**un élément de renfort transversal (20) pour rigidifier transversalement le toit peut être relié au cadre (10) et/ou au moins à l'un des éléments adaptateurs (16, 18) spécifiques à la variante de construction.

6. Véhicule à moteur selon l'une quelconque des revendications précédentes, **caractérisé en ce qu'**une pluralité d'éléments de fonctionnement (24, 26, 28) spécifiques à la variante de construction sont prévus, lesquels peuvent être reliés au cadre (10) et/ou au moins à un élément adaptateur (16 18) et/ou à une partie de volet (32, 40, 46).
